# FASCICULE DE BREVET EUROPEEN

(11) **EP 3 292 032 B1**
(45) Date de publication et mention de la délivrance du brevet: **07.08.2019**
(21) Numéro de dépôt: 16723419.4
(22) Date de dépôt: 18.04.2016
(51) Int. Cl.: B60W 10/06, B60W 30/02, B60W 30/18

(54) **PROCEDE DE GESTION DES PENTES DE L'AGREMENT PREVENTIF EN DECELERATION**
VERFAHREN ZUR VERWALTUNG PRÄVENTIVER GENEHMIGUNGSGRADIENTEN WÄHREND DER ENTSCHLEUNIGUNG
METHOD FOR MANAGING PREVENTIVE APPROVAL GRADIENTS DURING DECELERATION

(30) Priorité: 04.05.2015 FR 1553971
(43) Date de publication de la demande: 14.03.2018
(73) Titulaire: PSA AUTOMOBILES S.A., 78300 Poissy (FR)
(72) Inventeur: DESHAYES, Juliette, 78510 Triel sur Seine (FR); THOMAS, Mathieu, 78280 Guyancourt (FR)
(86) Numéro de dépôt international: PCT/FR2016/050896
(87) Numéro de publication internationale: WO 2016/177950

(56) Documents cités:
- EP-A1- 2 799 699
- WO-A1-2007/116168
- WO-A1-2015/067874
- FR-A1- 2 718 191
- FR-A1- 2 853 360

## Description

La présente invention porte sur un procédé de gestion des pentes de l'agrément préventif lors d'une décélération.

L'invention trouve une application particulièrement avantageuse dans le domaine de la commande des véhicules équipés d'un Groupe Moto-Propulseur thermique essence ou diesel avec une boîte de vitesses de type manuelle, automatisée, pilotée ou à double embrayage.

De tels véhicules sont équipés d'un calculateur permettant d'adapter de manière automatique le point de fonctionnement de chacun des organes du véhicule, en particulier le moteur thermique, afin de respecter la volonté du conducteur en termes de couple demandé. Pour obtenir un agrément de conduite optimal, le calculateur met en oeuvre deux types de filtrage du couple demandé par le conducteur réalisés à l'aide d'un module d'agrément préventif et d'un module d'agrément curatif.

Le module d'agrément préventif assure ainsi un filtrage d'un couple de consigne correspondant à la volonté du conducteur afin de passer les jeux moteur en limitant au maximum les à-coups de la chaîne de traction. On appelle "jeux moteur" le phénomène de torsion des éléments de transmission entre le moment où le moteur thermique se pose sur ses cales et le moment où le moteur thermique entraîne le véhicule. Les jeux moteur correspondent ainsi au couple appliqué pour lequel ni le moteur thermique ni la roue ne s'entraînent l'un avec l'autre lors d'une phase transitoire d'accélération.

Le module d'agrément curatif permet d'atténuer les éventuelles oscillations du régime moteur résultant du passage des jeux moteur. A cet effet, il génère un couple en opposition de phase avec le régime moteur.

Le module d'agrément préventif fonctionne de la manière suivante. Le couple de consigne est calculé afin de déterminer si le conducteur demande d'accélérer ou de décélérer. Pour ce faire, le gradient de couple de consigne est scruté, en fonction d'un régime moteur, d'un rapport de boîte de vitesses et d'une position de pédale d'accélération actionnée par le conducteur. Ensuite, selon le couple de consigne, un filtrage préventif est appliqué pour filtrer la demande du conducteur selon un profil de couple préventif bien précis.

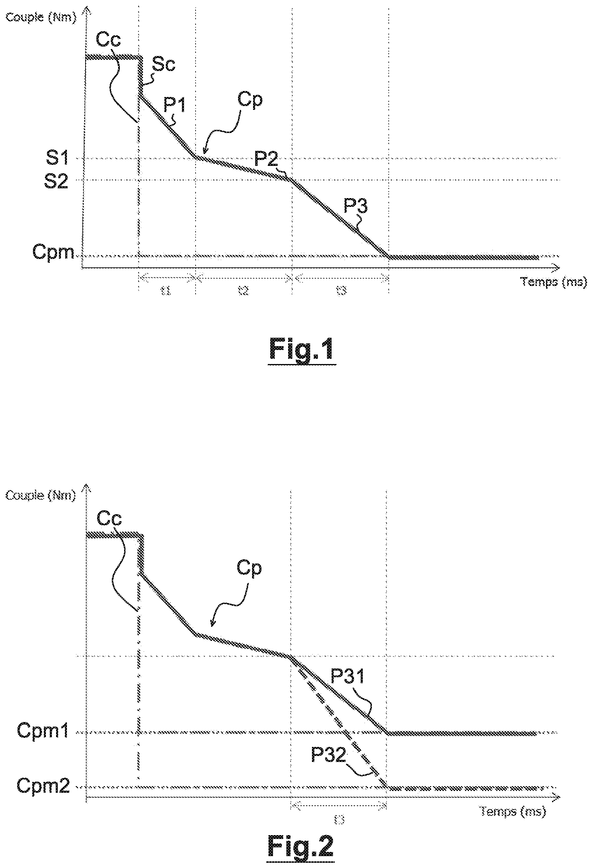

Plus particulièrement, comme cela est illustré par la figure 1, lorsque le conducteur lève le pied de la pédale d'accélération afin de décélérer, le couple de consigne Cc rejoint un couple de pertes moteur Cpm. Le couple de pertes moteur Cpm correspond au couple nécessaire au moteur pour faire avancer le véhicule, en prenant compte des frottements moteurs, des pertes liées aux accessoires tels que l'alternateur ou la climatisation. Pendant ces phases de décélérations, un filtrage spécifique est appliqué par le module d'agrément préventif pour permettre au couple préventif Cp de rejoindre progressivement le couple de pertes moteur Cpm sans générer d'à-coup. Le profil de filtrage est défini de telle sorte que lorsque le conducteur lève le pied, des pentes P1, P2, P3 sont appliquées au couple préventif afin de passer les jeux moteurs sans à-coups.

Dans les procédés de filtrage existants, les raideurs des pentes P1, P2 sont définies par les seuils de couple S1, S2 que l'on souhaite atteindre à la fin de chacune d'elles et par des durées de transition t1, t2 pour rejoindre ces mêmes seuils S1, S2.

La dernière pente P3 permet au couple préventif Cp de rejoindre, depuis le seuil S2, le couple de pertes moteur Cpm, dont le niveau varie en fonction de l'état d'activation des accessoires tels que l'alternateur, la climatisation, ou encore en fonction de la température du moteur. Dans les procédés de filtrage existants, la raideur de la pente P3 est définie par le couple Cpm que l'on souhaite atteindre et par une durée de transition t3 pour rejoindre ce même seuil Cpm.

Ainsi, comme cela est visible sur la figure 2, selon le niveau de couple de pertes moteur Cpm, pour une même durée de transition fixe t3, la raideur des pentes P31, P32 est différente. Soit un premier couple de pertes moteur Cpm 1 correspondant par exemple aux pertes moteur à chaud de l'ordre de -20Nm et un deuxième couple de pertes moteur Cpm 2 correspondant par exemple aux pertes moteur à chaud avec la climatisation activée, de l'ordre de -40Nm. Avec une durée de transition identique t3, la pente P32 rejoignant le deuxième couple moteur Cpm 2, de l'ordre de -40Nm, est deux fois plus raide que la pente P31 rejoignant le premier couple moteur Cpm 1, de l'ordre de -20Nm.

Or lorsque le couple préventif Cp rejoint le couple de pertes moteur Cpm 1, Cpm 2, l'injection est coupée. Ainsi une pente trop raide, comme la pente P32, génère un à-coup créé par le fait de couper l'injection alors que la quantité injectée précédemment était importante. Cet à-coup ressenti par le conducteur se traduit par des problèmes d'agrément de conduite. A l'inverse, une pente trop plate, comme la pente P31, crée un véhicule filant, c'est-à-dire que la décélération est très lente alors que le conducteur ne pose plus le pied sur l'accélérateur. Ce dernier cas entraîne une surconsommation, dans la mesure où l'injection n'est pas coupée.

La détermination de la durée de transition t3 est ainsi complexe, dans la mesure où il est nécessaire de prendre en compte le pire niveau de couple de pertes moteur, c'est-à-dire le couple de pertes moteur le plus faible, afin d'y associer la durée de transition t3 correspondante et s'assurer de ne pas générer d'à-coup. Cependant, dès que le niveau de couple de pertes moteur augmente, le filtrage du module d'agrément préventif est plus long, plus filant, donc moins décélérant, et crée une surconsommation. La raideur des pentes n'est ainsi pas réellement maîtrisée.

On connait encore le document WO2007116168A1 correspondant au préambule de la revendication 1.

L'invention vise à remédier efficacement à ces inconvénients, en proposant un procédé de filtrage d'un couple de consigne vers un couple de pertes moteur à atteindre lors d'une décélération d'un véhicule automobile équipé d'un groupe motopropulseur thermique comprenant :
- une étape de détermination dudit couple consigne, et
- une étape de filtrage préventif comprenant une étape d'application d'au moins une pente de couple à un couple préventif pour rejoindre progressivement ledit couple de pertes moteur,
caractérisé en ce qu'un décrément de ladite pente de couple est calibré indépendamment d'une durée de transition entre un instant de début et un instant de fin de l'application de ladite pente de couple calibrée pour rejoindre ledit couple de pertes moteur.

L'invention permet ainsi de gérer l'inclinaison des pentes de couple appliquées à un couple préventif directement à partir d'un décrément de couple calibrable au lieu d'une durée de transition, ce qui améliore l'agrément de conduite, facilite l'implémentation du procédé de filtrage, et diminue la consommation en carburant du véhicule. L'invention permet en outre de maîtriser la raideur de l'ensemble des pentes du profil préventif en levée de pied dans toutes les situations de vie du véhicule.

Selon une mise en oeuvre, ledit décrément de la pente de couple est calibré en fonction d'un rapport de boîte de vitesses, d'un régime moteur, et/ou d'un couple de décélération.

Selon une mise en oeuvre, ladite étape de détermination dudit couple de consigne est réalisée en fonction d'un régime moteur, d'un rapport de boîte de vitesses, et d'une position d'une pédale d'accélération.

Selon une mise en oeuvre, ledit procédé de filtrage comporte en outre une étape de filtrage curatif consistant à appliquer un couple correctif en opposition de phase avec des oscillations d'un régime moteur.

Selon une mise en oeuvre, ladite étape de filtrage préventif comprend une étape d'application d'un saut négatif du couple préventif lors d'un commencement de ladite décélération.

Selon une mise en oeuvre, ladite étape de filtrage préventif comprend :
- une étape d'application d'une première pente de couple définie par un premier seuil de passage des jeux moteurs, un décrément de ladite première pente de couple étant calibré indépendamment d'une première durée de transition,
- une étape d'application d'une deuxième pente de couple définie par un deuxième seuil de passage des jeux moteurs, un décrément de ladite deuxième pente de couple étant calibré indépendamment d'une deuxième durée de transition, et
- une étape d'application d'une troisième pente de couple dont un décrément est calibré indépendamment d'une troisième durée de transition.

L'invention a également pour objet un calculateur moteur comportant une mémoire stockant des instructions logicielles destiné à la mise en oeuvre du procédé de filtrage d'un couple de consigne tel que précédemment défini.

L'invention a également pour objet un groupe motopropulseur comprenant un moteur thermique associé à des moyens de transmissions comprenant un tel calculateur.

L'invention a également pour objet un véhicule automobile comprenant un tel groupe motopropulseur.

L'invention sera mieux comprise à la lecture de la description qui suit, et à l'examen des figures qui l'accompagnent. Ces figures ne sont données qu'à titre illustratif mais nullement limitatif de l'invention.
La figure 1, déjà décrite, montre une représentation graphique du profil de filtrage appliqué par le module d'agrément préventif lors de la mise en oeuvre d'un procédé selon l'état de la technique;
La figure 2, déjà décrite, est une représentation graphique mettant en évidence les inconvénients des profils de filtrage appliqués par le module d'agrément préventif lors de la mise en oeuvre d'un procédé selon l'état de la technique;
La figure 3 montre une représentation schématique d'un système de gestion de la commande en couple d'un groupe motopropulseur thermique selon l'invention;
La figure 4 montre une représentation graphique du profil de filtrage appliqué par le module d'agrément préventif lors de la mise en oeuvre d'un procédé selon la présente invention.

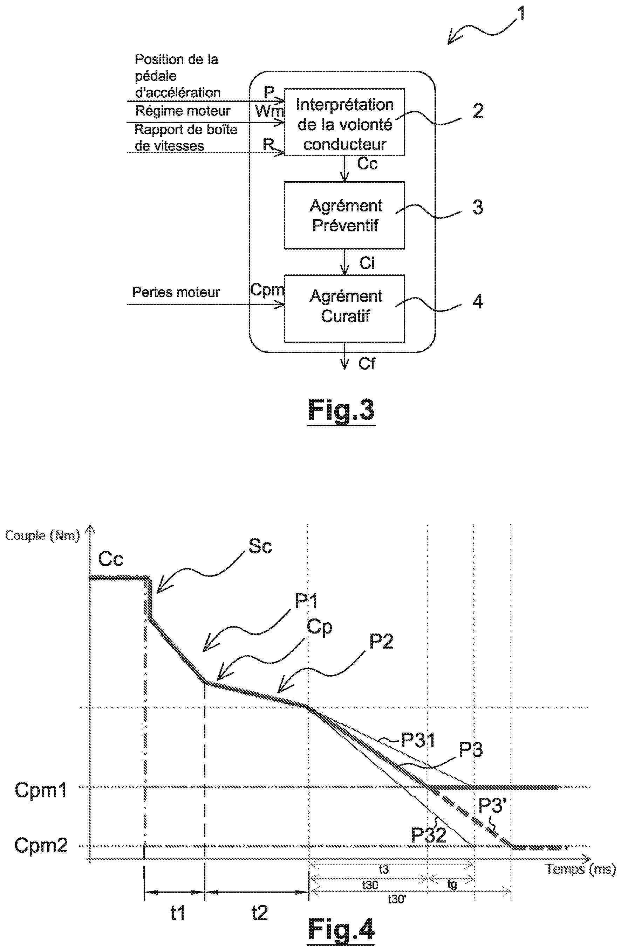

La figure 3 montre un système 1 de gestion de la commande en couple d'un moteur thermique intégré dans une mémoire d'un calculateur moteur sous forme d'instructions logicielles. Ce système 1 comporte un module 2 d'interprétation de la volonté du conducteur, ainsi qu'un module 3 d'agrément préventif interagissant avec un module 4 d'agrément curatif. Un tel calculateur peut équiper un groupe motopropulseur comprenant un moteur thermique essence ou Diesel associé à des moyens de transmissions tels qu'une boîte de vitesses de type manuelle, automatisée, pilotée ou à double embrayage.

Plus précisément, le module 2 détermine un couple Cc, dit couple de consigne, à partir du régime moteur Wm, du rapport R de boîte de vitesses engagé et de la position P de la pédale d'accélération actionnée par le conducteur afin de retranscrire la volonté du conducteur.

Le couple de consigne Cc est alors filtré à l'aide du module 3 d'agrément préventif afin de limiter au maximum les à-coups lors du passage des jeux moteur.

Plus précisément, le module 3 détermine dans un premier temps un couple préventif Cp qui est ensuite traduit en un couple, dit couple indiqué Ci, prenant en compte les pertes du moteur. Ainsi, le couple indiqué est égal à la somme du couple préventif Cp issu du filtrage et d'un couple Cpm de pertes moteur : Ci = Cp + Cpm. Le couple de pertes moteur Cpm correspond au couple nécessaire au moteur pour faire avancer le véhicule, en prenant notamment en compte les frottements moteurs, ainsi que les pertes liées aux accessoires, tels que l'alternateur ou la climatisation.

Le module 4 d'agrément curatif surveille l'évolution du régime moteur Wm et atténue l'oscillation de régime éventuelle en générant, un couple de correction Ccor en opposition de phase avec le régime moteur Wm. Le couple résultant est le couple final Cf envoyé au moteur puis converti en commande des différents organes, comme par exemple en une quantité de carburant à injecter dans les cylindres du moteur thermique.

Comme illustré en figure 4, lorsque le conducteur lève le pied de la pédale d'accélération afin de décélérer, le couple de consigne Cc rejoint un couple de pertes moteur Cpm1, Cpm2. Pendant cette phase de décélération, le filtrage préventif est appliqué pour permettre au couple préventif Cp de rejoindre progressivement le couple de pertes moteur Cpm1, Cpm2 sans générer d'à-coup.

Plus précisément, le profil de filtrage est défini de telle sorte que lorsque le conducteur lève le pied, un saut de couple négatif Sc est appliqué pour commencer à décélérer, puis trois pentes de couple successives P1, P2, P3 ou P3' sont appliquées afin de passer les jeux moteurs sans à-coups.

En outre, afin de s'affranchir des durées de transition, les pentes P1, P2, P3 ou P3' sont déterminées directement à partir de décréments de couple calibrés indépendamment des durées de transitions.

Ainsi, la première pente de couple P1 définie par un premier seuil S1 de passage des jeux moteurs présente un décrément calibré indépendamment de la durée de transition t1 entre un instant de début et un instant de fin de l'application de la pente de couple P1.

La deuxième pente de couple P2 définie par un deuxième seuil S2 de passage des jeux moteurs présente un décrément calibré indépendamment de la durée de transition t2 entre un instant de début et un instant de fin de l'application de la pente de couple P2.

Le décrément de la dernière pente de couple P3, P3' est calibré indépendamment du couple cible Cpm1, Cpm2 et indépendamment d'une durée de transition entre un instant de début et un instant de fin de l'application de la pente de couple P3, P3'. Le décrément des pentes P3, P3' est paramétrable en fonction du rapport de boîte de vitesses R, du régime moteur Wm, et du couple de décélération, afin de pouvoir dissocier les décélérations depuis des plus ou moins forts posés de pied.

Ainsi, la raideur des pentes P3, P3' pour atteindre les deux niveaux de couple de pertes moteur Cpm 1, Cpm 2, est identique.

La pente P3 permet au couple préventif Cp de rejoindre progressivement un couple de pertes moteur Cpm1 de l'ordre de -20Nm en une durée de transition t30. Etant plus raide que la pente P31 appliquée lors de la mise en oeuvre du procédé selon l'état de l'art (cf. figure 2), la pente P3 engendre une durée de transition t30 moins importante que la durée de transition t3 de la pente P31, ce qui permet d'éviter une surconsommation en carburant du véhicule. Le gain de temps résultant est représenté par la durée tg.

La pente P3' permet au couple préventif Cp de rejoindre progressivement un couple de pertes moteur Cpm2 de l'ordre de -40Nm en une durée de transition t30'. La pente P3', de même coefficient de droite que la pente P3, permet de ne pas avoir une pente trop importante comme la pente P32 (cf. figure 2), qui risquerait de provoquer un à-coup. Ainsi, selon le niveau de couple Cpm final cible, la durée de transition varie mais la pente sera identique sur un même point de fonctionnement. Finalement, dans ces deux cas, la décélération est maitrisée et identique.

## Revendications

1. Procédé de filtrage d'un couple de consigne (Cc) vers un couple de pertes moteur (Cpm1, Cpm2) à atteindre lors d'une décélération d'un véhicule automobile équipé d'un groupe motopropulseur thermique comprenant :
- une étape de détermination dudit couple consigne (Cc), et
- une étape de filtrage préventif comprenant une étape d'application d'au moins une pente de couple (P3, P3') à un couple préventif (Cp) pour rejoindre progressivement ledit couple de pertes moteur (Cpm1, Cpm2),
**caractérisé en ce qu'**un décrément de ladite pente de couple (P3, P3') est calibré indépendamment d'une durée de transition (t30, t30') entre un instant de début et un instant de fin de l'application de ladite pente de couple calibrée (P3, P3') pour rejoindre ledit couple de pertes moteur (Cpm1, Cpm2).

2. Procédé selon la revendication 1, **caractérisé en ce que** ledit décrément de la pente de couple est calibré (P3, P3') en fonction d'un rapport de boîte de vitesses (R), d'un régime moteur (Wm), et/ou d'un couple de décélération.

3. Procédé selon la revendication 1 ou 2, **caractérisé en ce que** ladite étape de détermination dudit couple de consigne (Cc) est réalisée en fonction d'un régime moteur (Wm), d'un rapport de boîte de vitesses (R), et d'une position (P) d'une pédale d'accélération.

4. Procédé selon l'une quelconque des revendications 1 à 3, **caractérisé en ce que** ledit procédé de filtrage comporte en outre une étape de filtrage curatif consistant à appliquer un couple correctif (Ccor) en opposition de phase avec des oscillations d'un régime moteur.

5. Procédé selon l'une quelconque des revendications 1 à 4, **caractérisé en ce que** ladite étape de filtrage préventif comprend une étape d'application d'un saut négatif du couple préventif (Sc) lors d'un commencement de ladite décélération.

6. Procédé selon l'une quelconque des revendications 1 à 5, **caractérisé en ce que** ladite étape de filtrage préventif comprend :
- une étape d'application d'une première pente de couple (P1) définie par un premier seuil (S1) de passage des jeux moteurs, un décrément de ladite première pente de couple (P1) étant calibré indépendamment d'une première durée de transition (t1),
- une étape d'application d'une deuxième pente de couple (P2) définie par un deuxième seuil (S2) de passage des jeux moteurs, un décrément de ladite deuxième pente de couple (P2) étant calibré indépendamment d'une deuxième durée de transition (t2), et
- une étape d'application d'une troisième pente de couple (P3, P3') dont un décrément est calibré indépendamment d'une troisième durée de transition (t3).

7. Calculateur moteur comportant une mémoire stockant des instructions logicielles destiné à la mise en oeuvre du procédé de filtrage d'un couple de consigne (Cc) tel que défini selon l'une quelconque des revendications précédentes.

8. Groupe motopropulseur comprenant un moteur thermique associé à des moyens de transmissions, **caractérisé en ce qu'**il comprend un calculateur selon la revendication 7.

9. Véhicule automobile, **caractérisé en ce qu'**il comprend un groupe motopropulseur selon la revendication précédente.

## Patentansprüche

1. Verfahren zum Filtern eines Solldrehmoments (Cc) zu einem Motorverlustdrehmoment (Cpm1, Cmp2), das bei einem Entschleunigen eines Kraftfahrzeugs, das mit einer Brennkraftmaschine ausgestattet ist, erreicht werden soll, das Folgendes umfasst:
- einen Bestimmungsschritt des Solldrehmoments (Cc), und
- einen Schritt zum präventiven Filtern, der einen Schritt des Anwendens mindestens eines Drehmomentgefälles (P3, P3') an ein präventives Drehmoment (Cp) umfasst, um allmählich zu dem Motorverlustedrehmoment (Cpm1, Cpm2) zu gelangen,
**dadurch gekennzeichnet, dass** ein Dekrement des Drehmomentgefälles (P3, P3') unabhängig von einer Übergangsdauer (t30, t30') zwischen einem Anfangsaugenblick und einem Endaugenblick des Anlegens des kalibrierten Drehmomentgefälles (P3, P3') kalibriert wird, um zu dem Motorverlustedrehmoment (Cpm1, Cpm2) zu gelangen.

2. Verfahren nach Anspruch 1, **dadurch gekennzeichnet, dass** das Dekrement des Drehmomentgefälles in Abhängigkeit von einem Gang (R), einer Motordrehzahl (Wm) und/oder einem Entschleunigungsdrehmoment kalibriert wird (P3, P3').

3. Verfahren nach Anspruch 1 oder 2, **dadurch gekennzeichnet, dass** der Bestimmungsschritt des Solldrehmoments (Cc) in Abhängigkeit von einer Motordrehzahl (Wm), einem Gang (R) und einer Position (P) eines Gaspedals ausgeführt wird.

4. Verfahren nach einem der Ansprüche 1 bis 3, **dadurch gekennzeichnet, dass** das Filterverfahren außerdem einen Schritt des kurativen Filterns umfasst, der in dem Anwenden eines Korrekturdrehmoments (Ccor) in Phasenopposition zu Schwingungen eines Motordrehmoments besteht.

5. Verfahren nach einem der Ansprüche 1 bis 4, **dadurch gekennzeichnet, dass** der Schritt des präventiven Filterns einen Schritt des Anwendens eines negativen Sprungs des präventiven Drehmoments (Sc) bei einem Beginn der Entschleunigung umfasst.

6. Verfahren nach einem der Ansprüche 1 bis 5, **dadurch gekennzeichnet, dass** der Schritt des präventiven Filterns Folgendes umfasst:
- einen Schritt des Anwendens eines ersten Drehmomentgefälles (P1), das von einem ersten Übergangsschwellenwert (S1) der Motorspiele definiert ist, wobei ein Dekrement des ersten Drehmomentgefälles (P1) unabhängig von einer ersten Übergangsdauer (t1) kalibriert wird,
- einen Schritt des Anwendens eines zweiten Drehmomentgefälles (P2), das von einem zweiten Übergangsschwellenwert (S2) der Motorspiele definiert ist, wobei ein Dekrement des zweiten Drehmomentgefälles (P2) unabhängig von einer zweiten Übergangsdauer (t2) kalibriert wird, und
- einen Schritt des Anwendens eines dritten Drehmomentgefälles (P3, P3'), von dem ein Dekrement unabhängig von einer dritten Übergangsdauer (t3) kalibriert wird.

7. Motorrechner, der einen Speicher umfasst, der Softwareanweisungen speichert, die zur Umsetzung des Filterverfahrens eines Solldrehmoments (Cc), wie nach einem der vorstehenden Ansprüche definiert, bestimmt ist.

8. Antriebsstrang, der eine Brennkraftmaschine umfasst, die mit Übertragungsmitteln assoziiert ist, **dadurch gekennzeichnet, dass** er einen Rechner nach Anspruch 7 umfasst.

9. Kraftfahrzeug, **dadurch gekennzeichnet, dass** es einen Antriebsstrang nach dem vorstehenden Anspruch umfasst.

## Claims

1. A method for filtering a reference torque (Cc) to an engine loss torque (Cpm1, Cpm2) to be reached during a deceleration of a motor vehicle provided with a thermal power train, including:
- a step of determining said reference torque (Cc), and
- a step of preventive filtering, including a step of applying at least one torque gradient (P3, P3') to a preventive torque (Cp) in order gradually to reach said engine loss torque (Cpm1, Cpm2),
**characterized in that** a decrease of said torque gradient (P3, P3') is calibrated independently from a transition time (t30, t30') between a start instant and an end instant of applying said calibrated toque gradient (P3, P3') in order to meet said engine loss torque (Cpm1, Cpm2).

2. The method according to Claim 1, **characterized in that** said decrease of the torque gradient is calibrated (P3, P3') as a function of a gear ratio (R), of an engine speed (Wm), and/or of a deceleration torque.

3. The method according to Claim 1 or 2, **characterized in that** said step of determining said reference torque (Cc) is realized as a function of an engine speed (Wm), of a gear ratio (R), and of a position (P) of an accelerator pedal.

4. The method according to any one of Claims 1 to 3, **characterized in that** said filtering process further comprises a step of curative filtering, consisting of applying a corrective torque (Ccor) in phase opposition with oscillations of an engine speed.

5. The method according to any one of Claims 1 to 4, **characterized in that** said preventive filtering step includes a step of application of a negative jump of the preventive torque (Sc) during a commencement of said deceleration.

6. The method according to any one of Claims 1 to 5, **characterized in that** said preventive filtering step includes:
- a step of application of a first torque gradient (P1) defined by a first passage threshold (S1) of engine play, a decrease of said first torque gradient (P1) being calibrated independently of a first transition duration (t1),
- a step of application of a second torque gradient (P2) defined by a second passage threshold (S2) of engine play, a decrease of said second torque gradient (P2) being calibrated independently of a second transition duration (t2), and
- a step of application of a third torque gradient (P3, P3'), a decrease of which is calibrated independently of a third transition duration (t3).

7. An engine computer comprising a memory storing software instructions intended for implementing the method of filtering a reference torque (Cc) as defined according to any one of the preceding claims.

8. A power train including a heat engine associated with transmission means, **characterized in that** it includes a computer according to Claim 7.

9. A motor vehicle, **characterized in that** it includes a power train according to the preceding claim.
